# EUROPEAN PATENT APPLICATION

(11) **EP 2 944 607 A1**
(43) Date of publication of application: **18.11.2015**
(21) Application number: 15167851.3
(22) Date of filing: 15.05.2015
(51) Int. Cl.: C01B 31/04, F02M 25/07

(54) **GRAPHITE SHEET**

(30) Priority: 16.05.2014 JP 2014102784
(71) Applicant: Toyota Jidosha Kabushiki Kaisha, Toyota-shi, Aichi-ken 471-8571 (JP); TOYO TANSO CO., LTD., 555-0011 Osaka (JP)
(72) Inventor: Mori, Rentaro, TOYOTA-SHI, AICHI-KEN, 471-8571 (JP); Kamiya, Sumio, TOYOTA-SHI, AICHI-KEN, 471-8571 (JP); Ishii, Hitoshi, TOYOTA-SHI, AICHI-KEN, 471-8571 (JP); Itakura, Kiyohito, TOYOTA-SHI, AICHI-KEN, 471-8571 (JP); Tamai, Yasuhiro, TOYOTA-SHI, AICHI-KEN, 471-8571 (JP); Minami, Tomoharu, MITOYO-SHI, KAGAWA, 769-1102 (JP); Misaki, Nobuya, MITOYO-SHI, KAGAWA, 769-1102 (JP)
(74) Representative: Intès, Didier Gérard André

(57) **Abstract**

A graphite sheet (10) includes: a graphite portion (11) made of a graphite; and at least one ceramic filler (12) provided within the graphite portion, having a substantially spherical shape, and made of a ceramic having a thermal conductivity higher than a thermal conductivity in a c-axis direction of the graphite.

## Description

### FIELD OF THE INVENTION

The present invention relates to a graphite sheet.

### BACKGROUND

Conventionally, there is known a graphite sheet that is a graphite processed into a sheet shape. For example, Japanese Laid-Open Patent Publication No. 2003-168882 discloses a graphite sheet used as a heat radiation member for a heat generation part in an electronic or electric device. Also, Japanese Laid-Open Patent Publication No. 2003-168882 discloses the graphite forming the graphite sheet that has a thermal conductivity in the a-b planar direction better than that of another metal such as a copper or an aluminum.

Meanwhile, as for structure of the graphite of the graphite sheet, plural layers are arranged in the c-axis direction (direction perpendicular to the a-b planar direction), each including hexagon rings which are arranged in the planar direction and each of which has plural carbon atoms. Further, the adjacent layers are connected to each other by Van der Waals' forces. Thus, there is a space between the adjacent layers of the graphite in the graphite sheet. For such structure, the thermal conductivity of the graphite sheet in the c-axis direction might not be good.

### SUMMARY OF THE INVENTION

According to an aspect of the present invention, there is provided a graphite sheet that has an improved thermal conductivity in a c-axis direction.

According to another aspect of the present invention, there is provided a graphite sheet including: a graphite portion made of a graphite; and at least one ceramic filler provided within the graphite portion, having a substantially spherical shape, and made of a ceramic having a thermal conductivity higher than a thermal conductivity in a c-axis direction of the graphite.

### BRIEF DESCRIPTION OF THE DRAWINGS

FIG. 1A is a schematic view of a graphite sheet according to the first embodiment;
FIG. 1B is a schematic partially enlarged sectional view of the graphite sheet in which a volume percentage of ceramic fillers is 40 vol%;
FIG. 1C is a schematic partially enlarged sectional view of a part A of FIG. 1B;
FIG. 2A is a schematic partially enlarged sectional view of the graphite sheet in which the volume percentage of the ceramic fillers is 30 vol%;
FIG. 2B is a schematic partially enlarged sectional view of a part B of FIG. 2A;
FIG. 3A is a graph of measurement results of thermal conductivities of the graphite sheets;
FIG. 3B is a table illustrating investigation results of a relation between a volume percentage of the ceramic fillers and the presence or absence of a crack in forming,
FIG. 4 is a schematic view illustrating laminar structure of a graphite of a graphite sheet according to a comparative example;
FIG. 5 is a schematic view illustrating an internal combustion engine where a graphic sheet according to the invention can be used (referred to as the second embodiment);
FIG. 6A is a schematic sectional view of an EGR cooler according to the second embodiment; and
FIG. 6B is a schematic sectional view of a heat exchanger.

### DETAILED DESCRIPTION

Embodiments according to the present invention will be described later.

### (First Embodiment)

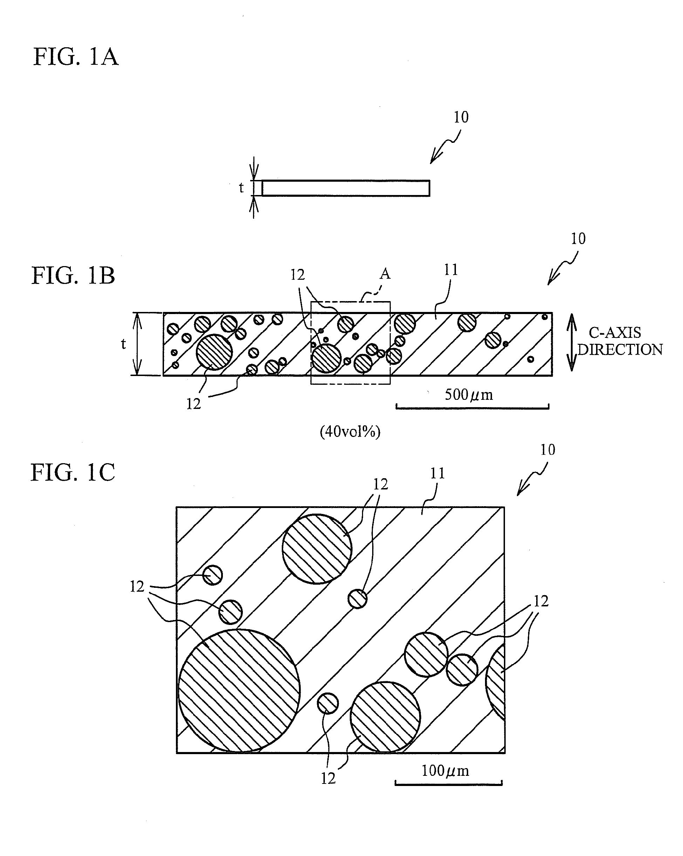

A graphite sheet 10 according to the first embodiment of the present invention will be described. FIG. 1A is a schematic view of the graphite sheet 10. The graphite sheet 10 according to the embodiment has a seat shape having a thickness t. Additionally, in the graphite sheet 10, the thickness direction is identical with the c-axis direction of the graphite. Also, hereinafter in the description, the c-axis direction of the graphite sheet 10 means the c-axis direction of the graphite of the graphite sheet 10, unless otherwise noted.

In the embodiment, an example of the thickness (t) of the graphite sheet 10 is 250 µm. The thickness of the graphite sheet 10 is, however, not limited to this. The thickness of the graphite sheet 10 may be set, for example, from the following view point. Specifically, in a case of using the graphite sheet 10 arranged between a first member and a second member of an internal combustion engine, the graphite sheet 10 is preferably thin from a view point of reducing a thermal conductivity between the first member and the second member sandwiching the graphite sheet 10. In contrast, in a case where the graphite sheet 10 is too thin, the elastic deformation amount of the graphite sheet 10 in the thickness direction might decrease. This might result in deterioration of a cushioning property of the graphite sheet 10 arranged between the first member and the second member. Thus, the thickness of the graphite sheet 10 may be set to be an appropriate value in consideration of the balance between such a thermal conductivity and a cushioning property.

FIG. 1B is a schematic partially enlarged sectional view of the graphite sheet 10. FIG. 1C is a schematic partially enlarged sectional view of a part A of FIG. 1B. Referring to FIGs. 1B and 1C, the graphite sheet 10 includes a graphite portion 11. The main component (major component) of this graphite portion 11 is a graphite. In the present disclosure, the mention that the graphite portion 11 is made of the graphite includes the case in which only if the main component of the graphite portion 11 is graphite, the graphite portion 11 may include any components other than graphite.

Further, the graphite sheet 10 includes one or more ceramic fillers 12, which are fillers (mixtures) made of ceramics, within the graphite portion 11. Specifically, the graphite sheet 10 according to the embodiment includes plural ceramic fillers 12. Also, in the embodiment, the plural ceramic fillers 12 are distributed and arranged within the graphite sheet 10. Further, in the embodiment, most of the plural ceramic fillers 12 are wholly buried within the graphite portion 11. A resin or the like is not arranged between the ceramic filler 12 and the graphite portion 11 in the embodiment. Thus, each ceramic filler 12 is in contact with the graphite forming the graphite portion 11.

Also, the ceramic filler 12 has a substantially spherical shape in the embodiment. In addition, the substantially spherical shape means a seemingly spherical shape, and this specific shape is not limited in particular. Further, in the embodiment, the substantially spherical shape includes a shape having an aspect ratio of one, that is, includes a true spherical shape. The aspect ratio is a value obtained by dividing the long side length by the short side length. As a preferred numerical example of the substantially spherical shape, the aspect ratio is equal to or less than two. This means that the long side length divided by the short side length equals to two. Additionally, the aspect ratio of the ceramic filler 12 according to the embodiment is about one.

A ceramic having a thermal conductivity higher than that of the graphite portion 11 in the c-axis direction is used as a material of the ceramic filler 12. Herein, the thermal conductivity of the graphite according to the embodiment in the c-axis direction is about 5 W/(m·K) as an example. Thus, a ceramic having a thermal conductivity higher than about 5 W/(m·K) is used as the ceramic of the ceramic filler 12 according to the embodiment.

Also, the ceramic of the ceramic filler 12 preferably has a as high as possible thermal conductivity, and is preferably as inexpensive as possible. AlN, SiC, BN, Si₃N₄, Al₂O₃, and the like are specific examples of ceramics each having a comparatively high thermal conductivity and being comparatively inexpensive, among ceramics each having a thermal conductivity higher than that of the graphite in the c-axis direction. It is thus preferable that the ceramic of the ceramic filler 12 be selected among these ceramics.

For example, because AlN and SiC each have a good thermal conductivity, among AlN, SiC, BN, Si₃N₄, Al₂O₃, and the like, the ceramic of the ceramic filler 12 may preferably include at least one of AlN (nitrided aluminum) and SiC (silicone carbide). As a specific example of this, the plural ceramic fillers 12 may include the ceramic fillers each including the ceramic including AIN. If only the main component of the ceramic is AIN, the ceramic may include any other components. Alternatively, the plural ceramic fillers 12 may include the ceramic fillers each including the ceramic including SiC. If only the main component of the ceramic is SiC, the ceramic may include any other components. Also, the plural ceramic fillers 12 may include both the ceramic filler including the ceramic including AIN and the ceramic filler including the ceramic including SiC. Further, the plural ceramic fillers 12 may include a single ceramic filler formed by mixing AIN with SiC and formed into a substantially spherical shape. That is, the ceramic of the single ceramic filler 12 may include AIN and SiC. Iin the embodiment presently described, all of the main components of the ceramics of the plural ceramic fillers 12 in the graphite sheet 10 are AIN.

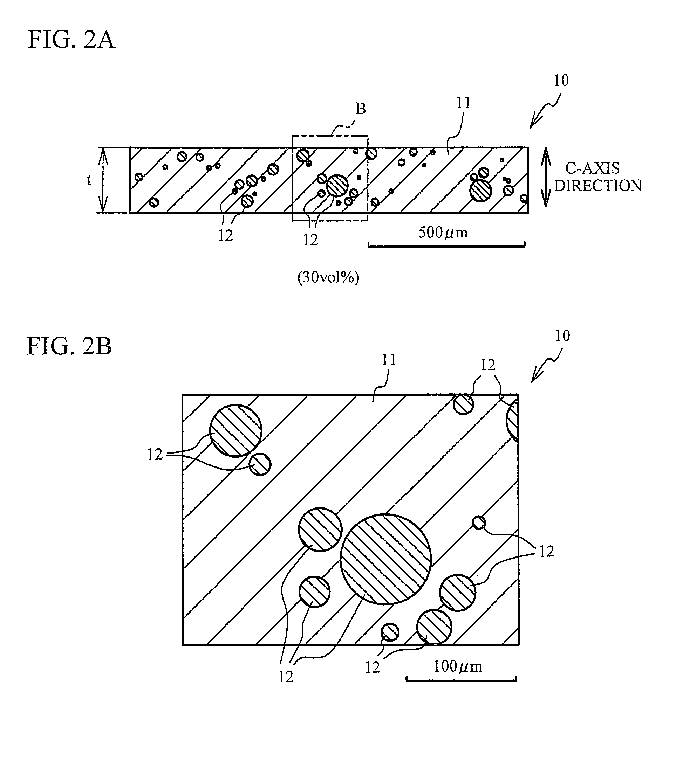

Although the volume percentage of the ceramic fillers 12 in the graphite sheet 10 is not specifically limited, the volume percentage ranges from 30 to 60 vol% in the embodiment. In addition, the volume percentage of the ceramic fillers 12 in the graphite sheet 10 illustrated by FIG. 1B is 40 vol%. As a specific example of the volume percentage ranging from 30 to 60 vol%, a sectional view in a case of 30 vol% is illustrated in FIG. 2A. FIG. 2A is a schematic partially enlarged sectional view of the graphite sheet 10 in which the volume percentage of the ceramic fillers 12 is 30 vol%. FIG. 2B is a schematic partially enlarged sectional view of a part B of FIG. 2A. Even in a case where the volume percentage of the ceramic fillers 12 is 30 vol%, the ceramic fillers 12 are distributed and arranged within the graphite portion 11 as illustrated in FIGs. 2A and 2B.

If the particle diameter of the ceramic filler 12 is too small, the ceramic fillers 12 might cause the delamination in the graphite sheet 10, that is, might cause the layers to be peeled off from each other. In contrast, if the particle diameter of the ceramic filler 12 is too large, the flexibility of the ceramic filler 12 might deteriorate, which might cause a crack in the ceramic filler 12 in forming the ceramic filler 12. As long as the particle diameter of the ceramic filler 12 ranges from 10 to 300 µm, such delamination and crack can be avoided. It is thus preferable that the ceramic filler 12 in the particle diameter range from 10 to 300 µm. Also, the particle diameter of the ceramic filler 12 illustrated in FIGs. 1B and 2A falls within this range from 10 to 300 µm.

Although the manufacturing method for the graphite sheet 10 is not limited to a specific manufacturing method, for example, the graphite sheet 10 according to the embodiment can be manufactured by the following method. Firstly, mixture powder formed by mixing graphite powder and a raw material of the ceramic filler 12 having a predetermined average particle diameter is prepared. The raw material is AIN in the embodiment. Secondly, this mixture powder is formed into a felt shape. This is referred to as preform body. This preform body is processed by rolling processing such as roll sheet forming. As a result, the graphite sheet 10 is achieved. Additionally, it is preferable to stepwisely reduce a gap between rollers in the rolling processing as the rolling processing proceeds. This is because the stepwise reduction in the gap between the rollers can effectively suppress a crack from occurring in the graphite sheet 10 in the rolling processing, that is, in the forming.

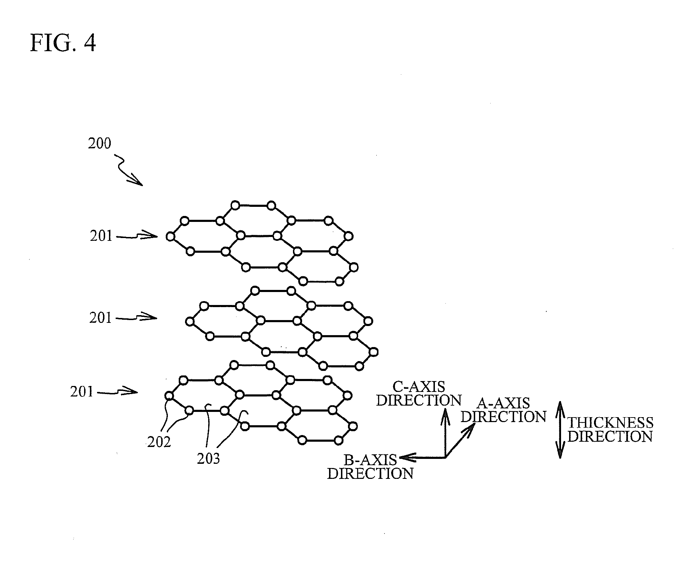

Next, effects of the graphite sheet 10 according to the embodiment will be described. Before this explanation, however, a detail description will be given of a problem with reference to the drawing. FIG. 4 is a schematic view illustrating laminar structure of a graphite of a graphite sheet 200 according to a comparative example. The graphite sheet 200 differs from the graphite sheet 10 according to the embodiment in that the graphite sheet 200 does not include the ceramic filler 12. In other words, the graphite sheet 200 entirely includes the graphite portion 11. In addition, as for the graphite sheet 10 according to the embodiment, the structure of the graphite in the graphite portion 11 is similar to the laminar structure illustrated in FIG. 4.

The graphite of the graphite sheet 200 has the structure in which plural layers 201 are arranged in the c-axis direction or along the c-axis. Also, in the graphite sheet 200, hexagon rings 203 each having plural carbon atoms 202 are arranged in the a-b planar direction including the a-axis and b-axis directions. In the graphite sheet 200, the c-axis direction of the graphite is identical with a thickness direction of the graphite sheet 200, and the a-b planar direction or the direction along the a-b plane of the graphite is identical with the direction along the surface of the graphite sheet 200. In the graphite sheet 200, adjacent layers 201 are connected to each other by Van der Waals' forces. Thus, there is a space between the adjacent layers 201 of the graphite in the graphite sheet in the graphite sheet 200.

Such structure makes it possible for the graphite sheet 200 to effectively conduct heat in the a-b planar direction. Thus, the graphite sheet 200 has a good thermal conductivity in the a-b planar direction. As a specific numerical example, the thermal conductivity of the graphite sheet 200 in the a-b planar direction is 200 W/(m·K). In contrast, it is difficult for the graphite sheet 200 to effectively conduct heat in the c-axis direction because of the space between the adjacent layers 201. For this reason, the graphite sheet 200 does not have a good thermal conductivity in the c-axis direction, and a specific numerical example is 5 W/(m·K).

On the contrary, the graphite sheet 10 according to the embodiment includes the ceramic filler 12, having a substantially spherical shape and made of the ceramic having the thermal conductivity higher than that of the graphite in the c-axis direction, within the graphite portion 11. For this reason, this ceramic filler 12 promotes the thermal conductivity in the c-axis direction of the graphite sheet 10. Accordingly, this can improve the thermal conductivity of the graphite sheet 10 in the c-axis direction, namely, the thermal conductivity of the entire graphite sheet 10 in the c-axis direction of the graphite.

Additionally, the graphite sheet 10 includes the plural ceramic fillers 12 in the embodiment, but the graphite sheet 10 is not limited to this arrangement. For example, the graphite sheet 10 may include only one ceramic filler 12. Even in this case, the thermal conductivity of the graphite sheet 10 in the c-axis direction can be improved, as compared with a case where the graphite sheet 10 does not include the ceramic filler 12 at all. It is, however, preferable that the graphite sheet 10 include the plural ceramic fillers 12 from the view point of effectively improving the thermal conductivity in the c-axis direction, as compared with the graphite sheet 10 that includes only one ceramic filler 12.

Also, since the ceramic of the ceramic filler 12 includes AIN having a good thermal conductivity, the graphite sheet 10 according to the embodiment can effectively improve the thermal conductivity in the c-axis direction. Additionally, in a case where the thermal conductivity of the c-axis direction can be improved like a case of the ceramic of the ceramic filler 12 includes SiC, since SiC as well as AIN have good thermal conductivities, the thermal conductivity in the c-axis direction can be effectively improved, like the case of AIN.

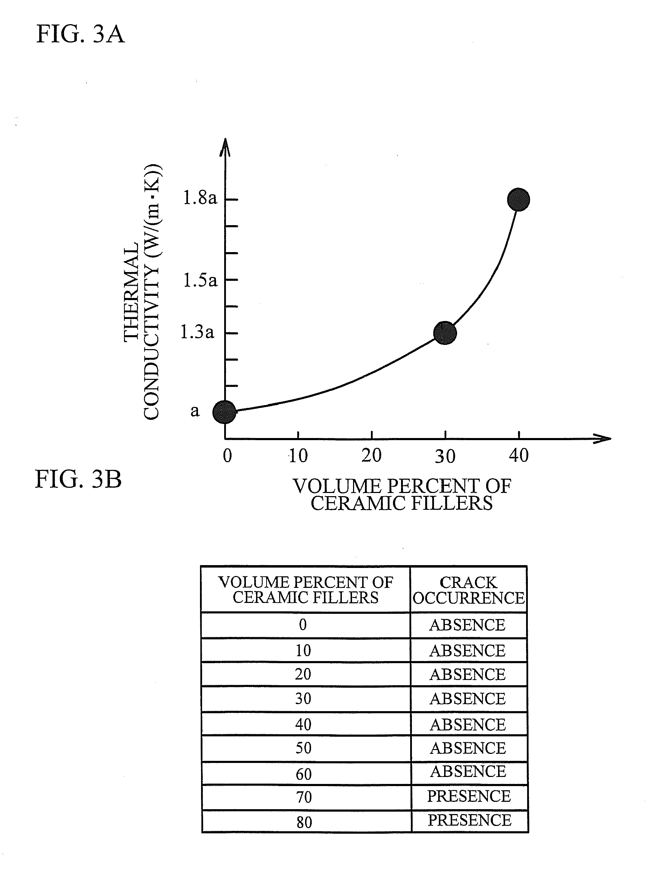

FIG. 3A is a graph of measurement results of the thermal conductivities of the graphite sheets 10. Specifically, FIG. 3A is a graph of the measurement results of the c-axis-direction thermal conductivities of the graphite sheet 10 in which the volume percentage of the ceramic fillers 12 is 0 vol%, the graphite sheet 10 in which the volume percentage of the ceramic fillers 12 is 30 vol%, and the graphite sheet 10 in which the volume percentage of the ceramic fillers 12 is 40 vol%. The above-mentioned graphite sheet 200 corresponds to the graphite sheet 10 in which the volume percentage of the ceramic fillers 12 is 0 vol%. The thermal conductivities in the c-axis direction are measured specifically by a laser flash method. In addition, the main component of the ceramic of this ceramic filler 12 is AIN. Also, the average particle diameter of this ceramic filler 12 is about 50 µm.

As illustrated in FIG. 3A, in the case where the volume percentage is 0 vol%, the thermal conductivity is "a" W/(m·K). Additionally, "a" is greater than 0. In contrast, in the case where the volume percentage is 30 vol%, the thermal conductivity is "1.3a" W/(m·K), that is, the thermal conductivity in this case is 1.3 times as high as that in the case where the volume percentage is 0 vol%. Further, in the case where the volume percentage is 40 vol%, the thermal conductivity is "1.8a" W/(m·K), that is, the thermal conductivity in this case is 1.8 times as high as that in the case where the volume percentage is 0 vol%.

As it is evident from FIG. 3A, the substantially-spherical-shaped ceramic filler 12 included within the graphite portion 11 of the graphite sheet 10 can improve the thermal conductivity of the graphite sheet 10 in the c-axis direction. Also as seen in FIG. 3A, in the case where the ceramic of the ceramic filler 12 is AIN, the volume percentage of the ceramic fillers 12 is 40 vol%, whereby the thermal conductivity in this case is improved by 1.8 times, that is, about 2.0 times. As seen in FIG. 3A, the thermal conductivity of the graphite sheet 10 in the c-axis direction increases as the volume percentage of the ceramic fillers 12 increases. Although the graph in FIG. 3A is based on the measurement results in the case where the ceramic of the ceramic filler 12 is AIN as described above, even in a case where the ceramic of the ceramic filler 12 is other than AIN, only if this ceramic has a thermal conductivity higher than that of the graphite in the c-axis direction, the thermal conductivity of the graphite sheet 10 in the c-axis direction can be increased by increasing the volume percentage of the ceramic fillers 12.

Meanwhile, since the thermal conductivity of the graphite sheet 10 in the c-axis direction can be increased by increasing the volume percentage of the ceramic fillers 12 as described above, a high volume percentage of the ceramic fillers 12 is preferable from a view point of improving the thermal conductivity in the c-axis direction. However, if the volume percentage of the ceramic fillers 12 is too high, the flexibility of the graphite sheet 10 might deteriorate. In such a case where the flexibility of the graphite sheet 10 deteriorates, there is a high possibility that a crack occurs in forming the graphite sheet 10.

FIG. 3B is a view illustrating investigation results of a relation between the volume percentage of the ceramic fillers 12 and the presence or absence of a crack in forming. As seen in FIG. 3B, in a case where the volume percentage of the ceramic fillers 12 is more than 60 vol%, a crack occurs in the graphite sheet 10 in forming the graphite sheet 10 (specifically, in rolling in the embodiment). Thus, from the view point of suppressing a crack from occurring in forming, it is preferable that the volume percentage of the ceramic fillers 12 is equal to or smaller than 60 vol %. A specific numerical example of the volume percentage of the ceramic fillers 12 ranges from 30 to 60 vol% in order to suppress a crack from occurring in forming the graphite sheet 10 and to have a good thermal conductivity in the c-axis direction. Additionally, the volume percentage of the ceramic fillers 12 according to the embodiment falls within this range as described above. That is, the graphite sheet 10 according to the embodiment can suppress a crack from occurring in forming the graphite sheet 10 and can improve the thermal conductivity in the c-axis direction.

Also, the graphite sheet 10 not only has a good thermal conductivity in the c-axis direction but also has a good flexibility, a good restorability against compression, that is, a good compression-restorability, and a good corrosion resistivity to acids and bases due to the property of the graphite portion 11. Accordingly, the graphite sheet 10 is applicable to various uses to utilize such a good performance.

### (Second Embodiment)

The second embodiment according to the present invention is an example of a use mode of the graphite sheet 10. Specifically, the graphite sheet 10 according to the embodiment is used while being arranged between the a first member and a second member different from the first member of an internal combustion engine 5. As an example of the first member and the second member of this internal combustion engine 5, the first member and the second member can be part of a heat exchanger installed in a part of the internal combustion engine 5 through which the exhaust gas passes are used in the embodiment. More specifically, an Exhaust Gas Recirculation (EGR) cooler 40 is used as an example of this heat exchanger in the embodiment.

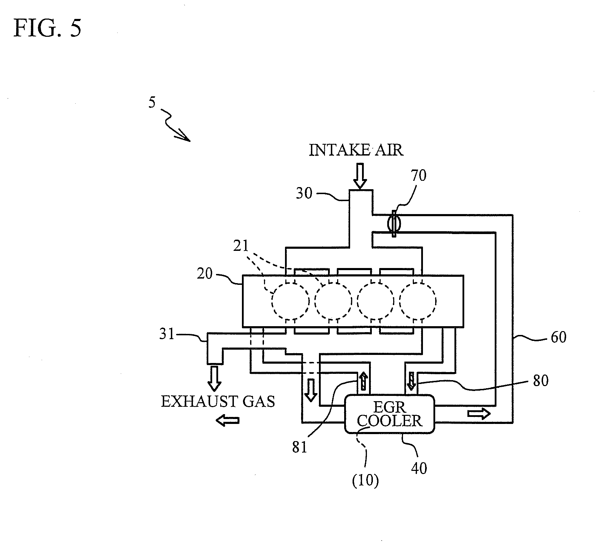

FIG. 5 is a schematic view of the internal combustion engine 5 including the graphite sheet 10 according to the embodiment. The internal combustion engine.5 illustrated in FIG. 5 is installed in a vehicle. The type of the internal combustion engine 5 is not especially limited, and various types of the internal combustion engines such as a diesel engine, a gasoline engine, and the like can be used. In the embodiment, the gasoline engine is used as an example of the internal combustion engine 5. The internal combustion engine 5 includes: an engine main body 20 having cylinders 21; an intake passage 30 introducing the intake air to the cylinders 21; and an exhaust passage 31 through which the exhaust gas exhausted from the cylinders 21 passes. In addition, the engine main body 20 includes: a cylinder block formed with the cylinders 21; a cylinder head arranged on the cylinder block; and pistons respectively arranged within the cylinders 21. Although the plural cylinders 21, specifically, four cylinders 21 are provided in the embodiment, the number of the cylinders 21 is not limited to this.

Also, the internal combustion engine 5 includes: the above described EGR cooler 40; an EGR passage 60; an EGR valve 70 disposed within the EGR passage 60; and a refrigerant supply passage 80; and a refrigerant discharge passage 81. The EGR cooler 40 is located between an upstream end and a downstream end of the EGR passage 60, namely, at a part of this passage. The EGR passage 60 recirculates a part of the exhaust gas from the exhaust passage 31 to the intake passage 30. Specifically, the EGR passage 60 according to the embodiment connects a part of the intake passage 30 with a part of the exhaust passage 31. Hereinafter, the exhaust gas passing through the EGR passage 60 is referred to as EGR gas. The EGR valve 70 opens and closes the EGR passage 60 in accordance with instructions from an Electronic Control Unit (ECU) functioning as a controller. The EGR valve 70 opens and closes the EGR passage 60 to adjust a flow rate of the EGR gas.

The EGR cooler 40 is a device that exchanges heat between the refrigerant and the EGR gas to cool the EGR gas. The refrigerant supply passage 80 introduces the refrigerant to the EGR cooler 40 from a refrigerant passage formed within the engine main body 20, hereinafter referred to as engine main body refrigerant passage. The refrigerant discharge passage 81 is a refrigerant passage that returns the refrigerant having passed through the EGR cooler 40 to the engine main body refrigerant passage. The above described graphite sheet 10 is used within this EGR cooler 40.

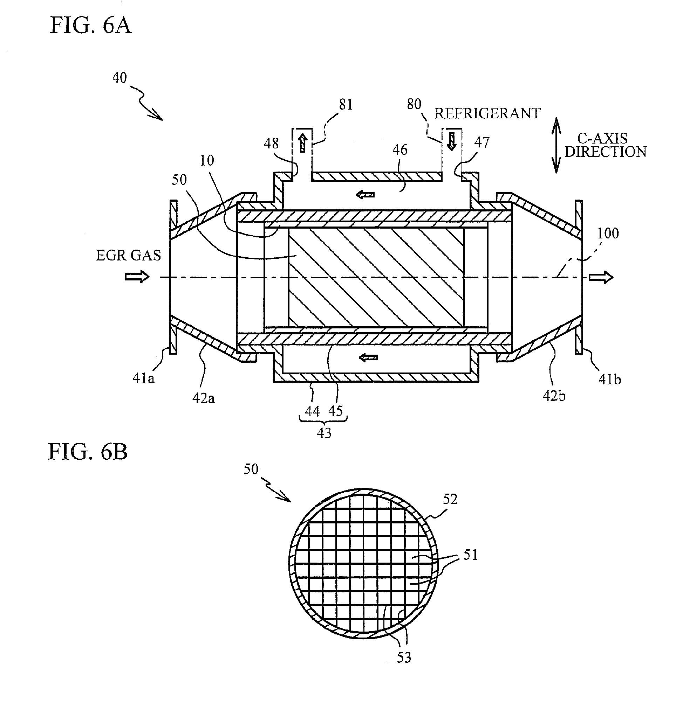

The EGR cooler 40 will be described in detail next. FIG. 6A is a schematic sectional view of the EGR cooler 40 according to the second embodiment. The EGR cooler 40 according to the embodiment includes: flanges 41a and 41b; corn pipes 42a and 42b; a housing 43; a heat exchanger 50 through which the EGR gas passes; and the above described graphite sheet 10. The housing 43 includes: an outer pipe 44; and an inner pipe 45 arranged within the outer pipe 44. In the embodiment, the flanges 41a and 41b, the corn pipes 42a and 42b, and the housing 43 are made of metals. Also, the heat exchanger 50 is made of a ceramic. Additionally, an axis 100 illustrated in FIG. 6A indicates a central axis of the housing 43 and the heat exchanger 50. Hereinafter, the direction along the axis 100 is referred to as axial direction. Also, the flow direction of the EGR gas is from the left side to the right side in FIG. 6A. In the description hereinafter, unless otherwise noted, the upstream side and the downstream side respectively mean the upstream side and the downstream side in the flow direction of the EGR gas.

The corn pipe 42a has a corn shape such that its inner diameter gradually increases toward the downstream side. The corn pipe 42b has a corn shape such that its inner diameter gradually decreases toward the downstream side. The flange 41 a is connected to an upstream end of the corn pipe 42a. A downstream end of the corn pipe 42a is connected to an upstream end of the outer pipe 44. The flange 41b is connected to a downstream end of the corn pipe 42b. An upstream end of the corn pipe 42b is connected to a downstream end of the outer pipe 44. The EGR cooler 40 is connected to the EGR passage 60 through the flanges 41 a and 41b.

In the embodiment, the flanges 41 a and 41b, and the corn pipes 42a and 42b are connected by welding. Also, the corn pipes 42a and 42b, and the outer pipe 44 are connected by welding. The connection technique for the flanges 41a and 41b, the corn pipes 42a and 42b and the outer pipe 44 is not limited to such welding, and various types of connection techniques such as a brazing connection technique with a metal brazing material can be used.

The outer pipe 44 and the inner pipe 45 are pipe members each having a substantially cylinder shape. The shapes of the outer pipe 44 and the inner pipe 45 are not limited to these. Also, the both ends of the outer pipe 44 are bent inward and are connected to the outer circumferential surface of the inner pipe 45. The both ends of the outer pipe 44 are specifically welded to the outer circumferential surface of the inner pipe 45. The connection technique for connecting the outer pipe 44 with the inner pipe 45 is, however, not limited to such a welding connection technique, and various types of connection techniques such as a brazing connection technique with a metal brazing material can be used.

A refrigerant passage 46 is provided between a middle portion of the outer pipe 44 and the inner pipe 45. In other words, the outer pipe 44 and the inner pipe 45 according to the embodiment function as a metal member defining the refrigerant passage 46. A refrigerant supply opening 47 and a refrigerant discharge opening 48 are provided in a part of the outer pipe 44 defining the refrigerant passage 46. The refrigerant supply opening 47 is connected to the refrigerant supply passage 80 described above in FIG. 5, and the refrigerant discharge opening 48 is connected to the refrigerant discharge passage 81 described above in FIG. 5. The refrigerant that has flowed through the refrigerant supply passage 80 flows into the refrigerant passage 46 from the refrigerant supply opening 47. The refrigerant that has flowed into the refrigerant passage 46 flows through the refrigerant discharge opening 48 into the refrigerant discharge passage 81 after having flowed into the refrigerant passage 46. Also, the length of the refrigerant passage 46 in the axial direction is greater than that of the heat exchanger 50 in the axial direction in the embodiment. As a result, the refrigerant passage 46 according to the embodiment covers the whole of the outer circumferential side of the heat exchanger 50.

In the embodiment, SUS (stainless steel) is used as examples of metal materials of the corn pipes 42a and 42b, the flanges 41 a and 41b, and the housing 43 including the outer pipe 44 and the inner pipe 45. However, the materials of these members are not limited to stainless steel, they may be any other metals. Alternatively, the materials of the corn pipes 42a and 42b, the flanges 41a and 41b, and the housing 43 may be ceramics. It is, however, preferable that these members be made of metals in the embodiment from a view of easily joining them by welding or brazing, as compared with the ceramics.

The heat exchanger 50 is a medium that conducts heat from the EGR gas to the graphite sheet 10. FIG. 6B is a schematic sectional view of the heat exchanger 50. Specifically, FIG. 6B schematically illustrates a cross section of the heat exchanger 50 illustrated in FIG. 6A cut off by a plane which is perpendicular to the axial direction of the heat exchanger 50. The heat exchanger 50 according to the embodiment includes plural internal gas passages 51 through which the EGR gas passes. The internal gas passages 51 are defined such that plural partition wall members 53 partition the inside of an outer circumferential member 52 defining the outer circumference of the heat exchanger 50. Additionally, the outer circumferential member 52 has a cylindrical shape in the embodiment, but the shape of the outer circumferential member 52 is not limited to this. Also, the partition wall members 53 are arranged into a grid shape in the embodiment, but the arrangement manner of the partition wall members 53 is not limited to this.

The specific ingredient of the ceramic of the heat exchanger 50, specifically, the materials of the outer circumferential member 52 and the partition wall members 53 are not especially limited, but SiC is preferable. SiC is suitable for the material of the heat exchanger 50 for the EGR cooler 40, because SiC has a good thermal conductivity among ceramics, a good corrosion resistance to the exhaust, and a good property to being processed, and it is inexpensive. Thus, the ceramic including the ingredient of SiC is used as an example of the material of the heat exchanger 50. SiC, that is, SiC with no additives, Si-impregnated SiC, (Si+Al)-impregnated SiC, metal composite SiC, and the like can be used as specific examples of the ceramics including the ingredient of SiC.

The graphite sheet 10 is arranged between the outer circumference of the heat exchanger 50 and the inner circumference of the inner pipe 45. Namely, the graphite sheet 10 according to the embodiment is arranged between the heat exchanger 50, that is, a first member, made of the ceramic, and the inner pipe 45, that is, a second member, being a metal member arranged in the outer circumferential side of the heat exchanger 50. Specifically, the graphite sheet 10 is arranged between the heat exchanger 50 and the inner pipe 45 while the first surface of the graphite sheet 10 in the c-axis direction, that is, an inner side surface is in contact with the outer circumference of the outer circumferential member 52 of the heat exchanger 50 and while the second surface of the graphite sheet 10 in the c-axis direction, that is, an outer side surface is in contact with the inner circumference of the inner pipe 45. In addition, the c-axis direction of the graphite sheet 10 arranged in this way is identical to the direction from the heat exchanger 50 to the inner pipe 45, that is, the up and down direction in FIG. 6A.

Also, the graphite sheet 10 according to the embodiment is arranged to cover the whole of the outer circumference of the heat exchanger 50. Specifically, as for the graphite sheet 10 according to the embodiment, the sheet-shaped graphite sheet 10 described in FIG. 1A is rounded into a cylindrical shape and covers the whole of the outer circumference of the heat exchanger 50. In addition, the volume percentage of the ceramic fillers 12 of the graphite sheet 10 is 40 vol % in the embodiment, but the volume percentage of the ceramic fillers 12 is not limited thereto. Further, although the material of the ceramic filler 12 of the graphite sheet 10 according to the embodiment is AlN, it is not limited thereto as long as the material of the ceramic filler 12 has a thermal conductivity higher than that of the graphite in the c-axis direction.

The EGR cooler 40 acts as follows. Firstly, when the EGR gas flows into the internal gas passage 51 of the heat exchanger 50, the heat is conducted from the EGR gas to the outer circumferential member 52 through the partition wall members 53. The heat conducted to the outer circumferential member 52 is conducted to the graphite sheet 10. The heat conducted to the graphite sheet 10 is conducted to the inner pipe 45. The heat conducted to the inner pipe 45 is absorbed by the refrigerant of the refrigerant passage 46. The EGR cooler 40 cools the heat of the EGR gas by the refrigerant in this way.

Since the thermal conductivity in the c-axis direction is improved in the graphite sheet 10 according to the embodiment as described in the first embodiment, the thermal conductivity between the first and second members of the internal combustion engine 5 sandwiching such a graphite sheet 10 can be improved. Specifically, in the embodiment, as an example of the first member, the ceramic heat exchanger 50 through which the exhaust gas passes from the internal combustion engine 5 is used, more specifically, the heat exchanger 50 of the EGR cooler 40 of the internal combustion engine 5 is used. Also, in the embodiment, as an example of the second member, the metal member forms the refrigerant passage 46 arranged in the outer circumferential side of the heat exchanger 50 is used, more specifically, the inner pipe 45 of the EGR cooler 40 is used. Accordingly, the graphite sheet 10 according to the embodiment can effectively conduct heat from the heat exchanger 50 to the inner pipe 45. As a result, the heat of the heat exchanger 50 can be effectively cooled by the refrigerant of the refrigerant passage 46. Consequently, the cooling performance of the exhaust gas can be improved.

Also, since the graphite sheet 10 includes the graphite portion 11, the graphite sheet 10 has a good flexibility and a good compression restorability, and the surface of the graphite sheet 10 has a low friction coefficient. Thus, even when the heat exchanger 50 and the inner pipe 45 thermally expand, the graphite sheet 10 according to the embodiment can relax the stress concentration on the heat exchanger 50 due to a difference in thermal expansion coefficient between the inner pipe 45 and the heat exchanger 50. This can avoid occurrence of a crack in the heat exchanger 50. A more detailed description of effects of the relaxation of the stress concentration on the heat exchanger 50 by this graphite sheet 10 is as follows.

First, as described above, the flexibility of the graphite sheet 10 is better than that of the metal and the ceramic. Thus, it can be easy to compress the graphite sheet 10 in the c-axis direction. Accordingly, for example, even when an increase in the temperature of the EGR cooler 40 causes the thermal expansion of the heat exchanger 50 and the inner pipe 45 in the radial direction, the easy compression of the graphite sheet 10 in the c-axis direction can relax the stress concentration on the heat exchanger 50 in the radial direction. Further, as described above, the compression restorability of the graphite sheet 10 is better than that of the metal and the ceramic. Thus, when a decrease in the temperature of the EGR cooler 40 restores the sizes of the heat exchanger 50 and the inner pipe 45 in the radial direction to their original sizes, the thickness of the graphite sheet 10 can also return easily. This avoid generating gaps between the heat exchanger 50, the graphite sheet 10, and the inner pipe 45. Furthermore, as described above, the friction coefficient of the surface of the graphite sheet 10 is lower than that of each of the ceramic and the metal. Thus, even if the heat exchanger 50 thermally expands in the axial direction, the circumference of the heat exchanger 50 can easily slide on the graphite sheet 10 in the axial direction. It is thus possible to relax the stress concentration on the heat exchanger 50 in the axial direction.

Also, the exhaust gas of the internal combustion engine 5 includes acid ingredients. Further, the exhaust gas of the internal combustion engine 5 reaches a high temperature (for example, about 700 degrees Celsius), for example, in a high load state of the internal combustion engine 5. In contrast, a corrosion resistance of the graphite sheet 10 to the heated acid is better than that of the metal such as the stainless steel, as mentioned above. Thus, the graphite sheet 10 according to the embodiment, which has an appropriate corrosion resistance to the heated exhaust gas, can improve the thermal conductivity between the heat exchanger 50 and the inner pipe 45.

### (Variation)

The graphite sheet 10 is not limited for use in the EGR cooler 40 of the internal combustion engine 5 described above. For example, since the graphite sheet 10 has a good flexibility, a good compression restorability, and a good corrosion resistance to the acid at a high temperature as described above, the graphite sheet 10 is suitable for use as a gasket of the internal combustion engine 5. In a case of using the graphite sheet 10 as the gasket of the internal combustion engine 5, for example, the graphite sheet 10 is arranged between the cylinder block, that is, the first member, and the cylinder head, that is, the second member of the internal combustion engine 5 such that the c-axis direction of the graphite is the direction from the cylinder block to the cylinder head. In this case, the graphite sheet 10 can improve the thermal conductivity between the cylinder block and the cylinder head while suppressing leakage of gas, oil, refrigerant, and the like from between the cylinder block and the cylinder head.

Also, the use manner of the graphite sheet 10 is not limited to its arrangement between the first and second members of the internal combustion engine 5 as described above. For example, since the graphite sheet 10 has a good electric conductivity, this property can be used for other uses. As a specific example, the graphite sheet 10 can be used for an electronic or electric device.

Although some embodiments of the present invention have been described in detail, the present invention is not limited to the specific embodiments but may be varied or changed within the scope of the present invention as claimed.

## Claims

1. A graphite sheet (10) comprising:
a graphite portion (11) made of a graphite; and
at least one ceramic filler (12) provided within the graphite portion, having a substantially spherical shape, and made of a ceramic having a thermal conductivity higher than a thermal conductivity in a c-axis direction of the graphite.

2. The graphite sheet of claim 1, wherein the ceramic includes at least one of AlN and SiC.

3. The graphite sheet of claim 1 or 2, wherein a volume percentage of the ceramic filler (12) in the graphite sheet is from about 30% to about 60%.

4. The graphite sheet of any one of claims 1 to 3, wherein the graphite sheet (10) is arranged between a first member (50) of an internal combustion engine and a second member (45) of the internal combustion engine different from the first member.

5. The graphite sheet of claims 4, wherein
the first member is a heat exchanger (50) made of a ceramic, an exhaust gas of the internal combustion engine passing through the heat exchanger,
the second member is a metal member (43) arranged in an outer circumferential side of the heat exchanger,
the metal member forms a refrigerant passage (46) through which a refrigerant passes.
